(19) Europäisches Patentamt
European Patent Office
Office européen des brevets

(11) EP 4 600 276 A1

(12) EUROPEAN PATENT APPLICATION

(43) Date of publication:
**13.08.2025 Bulletin 2025/33**

(21) Application number: **24157081.1**

(22) Date of filing: **12.02.2024**

(51) International Patent Classification (IPC):
***C08F 110/06*** *(2006.01)* ***C08K 5/00*** *(2006.01)*
*C08F 4/659* *(2006.01)* *C08K 5/06* *(2006.01)*
*C08K 5/523* *(2006.01)*

(52) Cooperative Patent Classification (CPC):
(C-Sets available)
**C08F 110/06; C08K 5/0083;** C08F 4/65912; C08F 4/65916; C08F 2420/07; C08K 5/06; C08K 5/523 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
- **WANG, Jingbo**
**4021 Linz (AT)**
- **HOFF, Matthias**
**4021 Linz (AT)**
- **KETTNER, Joana Elvira**
**4021 Linz (AT)**
- **ZIMMERMANN, Christian**
**4021 Linz (AT)**
- **RAUCH, Martin**
**4021 Linz (AT)**
- **VASZI, Zsolt**
**4021 Linz (AT)**

(74) Representative: **TBK**
**Bavariaring 4-6**
**80336 München (DE)**

(54) **SINGLE SITE CATALYZED POLYPROPYLENE HOMOPOLYMER WITH HIGH GAMMA-PHASE CONTENT**

(57) The present invention relates to a single site catalyzed polypropylene homopolymer (SSC PPH) with high gamma-phase content. Specifically, the present invention relates to a polypropylene homopolymer (PPH) composition, which comprises (A) 95.000 to 99.999 wt% based on the PPH composition of a single site catalyzed polypropylene homopolymer (SSC PPH), wherein the SSC PPH has 2,1 regio-defects ($^{13}$C-NMR spectroscopy) in an amount of 0.00 to 0.10 mol%, a pentad isotacticity <mmmm> (NMR) in the range of 70.0 to 90.0%, a weight average molecular weight $M_w$ (GPC) in the range of 10.0 to 1000.0 kg/mol, and a polydispersity MWD (GPC) in the range of 2.0 to 6.0, (B) 0.001 to 1.000 wt% based on the PPH composition of $\alpha$-nucleating agent, wherein the PPH composition has a $\gamma$-phase content $K\gamma$ (WAXS) of more than 0.30 and less than 0.99.

EP 4 600 276 A1

(52) Cooperative Patent Classification (CPC): (Cont.)

C-Sets
**C08F 110/06, C08F 4/6492;**
**C08F 110/06, C08F 4/65927;**
**C08K 5/0083, C08L 23/12;**
C08F 110/06, C08F 2500/03, C08F 2500/12,
C08F 2500/15, C08F 2500/30, C08F 2500/31,
C08F 2500/33, C08F 2500/34, C08F 2500/35;
C08F 110/06, C08F 2500/03, C08F 2500/15,
C08F 2500/35

## Description

The present invention relates to a polypropylene homopolymer (PPH) composition containing a specific single site catalyzed (SSC) polypropylene homopolymer (SSC PPH) and $\alpha$-nucleating agent to provide a high $\gamma$-phase content. The present invention further relates to a method for producing the PPH composition, uses of the PPH composition and articles comprising the PPH composition.

## Background of the Invention

Polypropylene is a thermoplastic material which is widely used due to desirable processing property, chemical resistance, electrical properties and mechanical properties. Thermoplastic refers to a plastic which can be softened to flow upon exposure to sufficient heat but will retain its solidified state upon cooling. Polypropylene can be used to manufacturing various kinds of injection-molded items, for example, daily necessities, kitchen equipment, toys, medical devices, electrical appliances, and extruded articles like pipes for use in vehicles, construction and infrastructure.

During solidification and crystallization of a polymer melt, a long relaxation time is needed for long-chains of macromolecules to change from a disorder state to an ordered crystalline state. Crystallization rate and crystallization temperature is generally low, which may lead to formation of big-size spherulitic crystals and obvious interfaces between these spherulites. The obvious interfaces between different big-size spherulites may induce different internal stress. Upon impact, cracks may form at the interfaces, which may further lead to fracture and failure of the solidified polymer. When a nucleating agent is added into the polypropylene melt, the nucleating agent provides adequate crystal nuclei.

Therefore, during cooling, the polypropylene melt can form more of small, orderly arranged, compactly and evenly dispersed spherulites or smaller units. Accordingly, the internal stress generated is small and is dispersed, which can improve mechanical properties and thermal properties of polypropylene and further promote the successful application of polypropylene.

Adding nucleating agent(s) in polypropylene can induce polypropylene to form orderly arranged and well-dispersed small spherocrystals, which may improve the physical properties of polypropylene. Polypropylene shows polymorphic behavior, depending on the polymerization procedure, thermal history and use of different nucleating agents.

It is well known that polypropylene can crystalize into different crystal forms, including $\alpha$ (alpha), $\beta$ (beta), $\gamma$ (gamma), and meso form. Among them the $\alpha$ form dominates in the majority of phase and is the most common and stable modification, whereas $\beta$ only appears in very specific case, with the exiting of highly selective nucleating agent. The meso form appears mainly in quenched products, like case films, and the $\gamma$ form is more exotic and limited means can apply to get a high $\gamma$-phase content.

EP 2526146 B1 relates to the use of a soluble $\alpha$-crystal nucleating agent selected from benzene-tris-amides, 1,3:2,4-bis-(3,4-dimethylbenzylidene) sorbitol, 1,3:2,4-dibenzy-lidensorbitol and/or bis-(3,4-dimethylbenzylidene) sorbitol showing a sequence of dissolution in heating and recrystallization in cooling, for improving the impact strength, stiffness and transparency of a polypropylene composition, which polypropylene composition comprises an isotactic propylene random copolymer showing a single-phase crystal structure as determined by electron microscopy and which isotactic propylene random copolymer comprises from 90.0 to 99.0 % by weight of propylene and from 1.0 to 10.0 % by weight of ethylene and/or higher $\alpha$-olefins with 4 to 8 carbon atoms.

WO 2020160892 A1 relates to $\beta$-nucleated SSC-PP homopolymers (see also Krache et al. below). An SSC-PP homopolymer composition with high $\beta$-phase content and good impact strength based on PP homopolymer having an isotacticity of 98.0 $\geq$ % and a relative amount of regiodefects of $\leq$ 0.2 % is claimed, while some limited $\gamma$-phase content are also found.

Krache et al (Macromolecules 2007, 40, 6871-6878) relates to the competition between $\alpha$, $\beta$, and $\gamma$ polymorphs in a $\beta$-nucleated isotactic PPH, where the reaction of a Ziegler Natta catalyzed PPH (pentad isotacticity <mmmm> of 91.8%) and an SSC-PPH (pentad isotacticity <mmmm> of 94.3%) to $\beta$-nucleation is compared, finding a relative $\gamma$-phase content of 0 in the former and up to 75% in the latter.

So far, significant $\gamma$-phase content has been associated with random copolymers and/or highly isotactic polypropylene with regio defects and the processing under specific conditions such as using large amount of specific nucleating agent.

## Summary of the invention

It has surprisingly been found that the interaction of a specific single site catalyzed polypropylene homopolymer (SSC PPH), which has a very low amount of 2,1 regio-defects, a moderate isotacticity and a moderate molecular weight being distributed narrowly, with a low amount of $\alpha$-nucleating agent leads to a polypropylene homopolymer (PPH) composition resulting in superior nucleation efficiency, to show high $\gamma$-phase content leading to improved properties such as improved processability, impact strength, transparency and stiffness, especially impact strength.

The present invention relates to a polypropylene homopolymer (PPH) composition, which comprises

(A) 95.000 to 99.999 wt% based on the PPH composition of a single site catalyzed polypropylene homopolymer (SSC PPH), wherein the SSC PPH has

- 2,1 regio-defects ($^{13}$C-NMR spectroscopy) in an amount of 0.00 to 0.10 mol%,
- a pentad isotacticity <mmmm> (NMR) in the range of 70.0 to 90.0%,
- a weight average molecular weight $M_w$ (GPC) in the range of 10.0 to 1000.0 kg/mol, and
- a polydispersity MWD (GPC) in the range of 2.0 to 6.0,

(B) 0.001 to 1.000 wt% based on the PPH composition of $\alpha$-nucleating agent, wherein the PPH composition has

- a $\gamma$-phase content Ky (WAXS) of more than 0.30 and less than 0.99.

In particular, single site catalyzed polypropylene homopolymers are an interesting material having a broad potential application range. Single site catalysis, contrary to Ziegler Natta catalysis, leads to a narrow molecular weight distribution (MWD), reducing the inherent level of self-nucleation, and also leads to a specific characteristic of the single site catalyzed polymer chains, where a more uniform concentration of defects (such as stereo- and/or regioerrors) is present. So far, a specific nucleation of the $\gamma$-phase is not possible. However, an $\alpha$-nucleating agent can in principle also induce the $\gamma$-phase, which is however favored mainly in case of highly isotactic PP with rather strongly "disturbed" chains caused by regio-defects or by random copolymerization with ethylene or higher $\alpha$-olefins.

The inventors, however, surprisingly found that the combination of a low amount of $\alpha$-nucleation agent with a specific single site catalyzed polypropylene homopolymer, which has a very low amount of 2,1 regio-defects, a moderate isotacticity and a moderate molecular weight being distributed narrowly, can provide a significant improvement in the $\gamma$-nucleation efficiency and thus completed the present invention.

Moreover, the inventors surprisingly found that the synergistic interaction of the low amount of $\alpha$-nucleating agent with the specific single site catalyzed polypropylene homopolymer as defined herein results in superior $\gamma$-nucleation properties, in particular leading to favorable balance between processability (especially in terms of shorter cycle time by relatively increased Tc, $\Delta$Tc), mechanical (especially in terms of stiffness and more specifically impact strength) and optical (especially in terms of transparency) properties.

Further, the present invention relates to a method for producing the PPH composition, uses of the PPH composition and articles comprising the PPH composition.

Preferred embodiments of the invention are depicted in the dependent claims and a detailed description of the invention is provided in the following description.

## Detailed description

The term "comprising" (as well as terms "containing", "including" or "having") as used in the present invention does not exclude other components. For the purposes of the present invention, the term "consisting of" is considered to be a preferred embodiment of the term "comprising of" (as well as terms "containing", "including" or "having) unless specifically defined otherwise. Likewise, if hereinafter a group is defined to comprise at least a certain number of embodiments, this is also to be understood to disclose a group, which preferably consists only of these embodiments, unless specifically defined otherwise. Further, unless explicitly described otherwise, the description of the present invention is to be understood so that one or more of any of the described preferred embodiments of the invention can be combined with the invention described in its most general features.

Further, where an indefinite or definite article is used when referring to a singular noun, e.g. "a", "an" or "the", this includes a plural of that noun unless something else is specifically stated.

In the following amounts are given in % by weight (wt%) unless it is stated otherwise.

## Polypropylene homopolymer composition

The polypropylene homopolymer (PPH) composition of the present invention comprises:

(A) 95.000 to 99.999 wt% based on the PPH composition of a single site catalyzed polypropylene homopolymer (SSC PPH), wherein the SSC PPH has

- 2,1 regio-defects ($^{13}$C-NMR spectroscopy) in an amount of 0.00 to 0.10 mol%,
- a pentad isotacticity <mmmm> (NMR) in the range of 70.0 to 90.0%,

- a weight average molecular weight $M_w$ (GPC) in the range of 10.0 to 1000.0 kg/mol, and
- a polydispersity MWD (GPC) in the range of 2.0 to 6.0,

(B) 0.001 to 1.000 wt% based on the PPH composition of α-nucleating agent, wherein the PPH composition has

- a γ-phase content Kγ (WAXS) of more than 0.30 and less than 0.99.

This combination of specific PP homopolymer and low amount of α-nucleating agent has surprisingly been found to result in significantly improved γ-nucieation efficiency, among others resulting in higher processability by increasing the crystallization temperature (higher ΔTc), improved mechanical (especially in terms of stiffness and more specifically impact strength) and optical (especially in terms of transparency) properties, and in particular in an improved overall performance (and balance) of these properties.

That is, the PPH composition in accordance with the present invention comprises the SSC PPH (component (A)) and α-nucleating agent (Component (B)) and optionally other component(s) such as additives (component (C)). The requirement applies that the components (A) and (B) and, if present, the optional other component(s) (C) add up to 100 wt%. This means for example in case that only components (A) and (B) are present, these components add up to 100 wt%, but in case that components (A), (B) and (C) are present, components (A), (B) and (C) add up to 100 wt%. The defined ranges of the indications of quantity for the individual components (A) and (B) are to be understood such that an arbitrary quantity for each of the individual components can be selected within the specified ranges provided that the proviso is satisfied that the sum of all the components (A) and (B) and optionally component(s) (C) add up to 100 wt%. Further, as apparent from the word "polypropylene homopolymer (PPH) composition", the present invention does not aim at a composition of different polymers. Accordingly, the polypropylene composition comprises optionally other component(s) (C) such as additives, but preferably no other polymer components than the SSC PPH, except for the optional polymeric nucleating agent(s) and/or matrix polymers of a masterbatch for adding additive(s) and/or nucleating agent(s) in an amount usually not exceeding 4.00 wt%, preferably in an amount of 3.00 wt% or less or 1.00 wt% or less.

The present invention can achieve the herein described envisaged beneficial technical effects by providing a PPH composition which consists of the component (A), i.e. the SSC PPH which is a polypropylene homopolymer in which only propylene units are detectable (e.g. determined with $^{13}C$ NMR spectroscopy), and the component (B), i.e. the α-nucleating agent, each provided in the respective claimed amounts adding up to 100 wt% in sum. However, a skilled person and the present invention appreciates modifications e.g. in that the PPH composition comprises the components (A) and (B) and further contains optional component(s) (C), as long as the claimed requirements of the individual constituents as well as that of the PPH composition are satisfied. Further, the homopolymer may contain trace amounts of contaminate comonomers, e.g. alpha-olefin comonomers and the term homopolymer, as used herein, refers to a propylene polymer containing at least 99.0 wt%, preferably at least 99.8 wt%, more preferably of at least 99.9 wt%, most preferably 100 wt% of propylene units (e.g. determined with $^{13}C$ NMR spectroscopy), as long as the claimed requirements of the individual constituents as well as that of the PPH composition are satisfied. In any case, the SSC PPH is preferably a polypropylene homopolymer in which only propylene units are detectable (e.g. determined with $^{13}C$ NMR spectroscopy) and the PPH composition preferably does not contain other polymer components than the SSC PPH (except for optional matrix polymer of a masterbatch and polymeric nucleating agent as discussed herein).

The polypropylene homopolymer (PPH) composition is characterized in having a γ-phase content Kγ (WAXS) of more than 0.30 and less than 0.99. That is, the PPH shows the γ-phase as the crystalline phase in an amount of more than 30%.

The PPH composition of the present invention preferably a γ-phase content Kγ (WAXS) of at least 0.40, more preferably at least 0.50, more preferably 0.55 to 0.95, even more preferably 0.60 to 0.90, most preferably 0.65 to 0.85. Within these ranges, the effects of the present invention are more pronounced and/or their achievement is facilitated.

The PPH composition of the present invention preferably has a crystallization temperature (Tc) (DSC) of 108.0 to 128.0°C, preferably 112.0 to 125.0°C, more preferably 112.5 to 122.5°C. Within these ranges, the effects of the present invention are more pronounced and/or their achievement is facilitated.

The PPH composition of the present invention preferably has a relative Tc increase, i.e. $\Delta Tc = Tc - Tc_{UN}$, wherein $Tc_{UN}$ corresponds to the Tc of the SSC PPH before nucleation, of 8.0 to 25.0°C, preferably 9.0 to 20.0°C. In this case, the increase of the γ-crystallization induced by nucleation is more pronounced enabling to increase processability by shortening the cycle time.

The PPH composition of the present invention preferably has a main melt enthalpy (Hm2) (DSC) of 45.0 to 85.0 J/g, preferably 48.0 to 80.0 J/g, more preferably 50.0 to 78.0 J/g. Within these ranges, the effects of the present invention are more pronounced and/or their achievement is facilitated. Note that the term 'main' melt enthalpy refers to the melt enthalpy peak with the highest enthalpy amount associated with the main crystalline form of the polymer. Since the dominant crystalline form of the SSC PPH is the γ-form as defined above, the 'main' melt enthalpy relates to the enthalpy of the γ-form. The same applies to the 'main' melting temperature as used herein.

The PPH composition of the present invention preferably has a main melting temperature (Tm2) (DSC) of 125.0 to 148.0°C, preferably 128.0 to 145.0, more preferably 129.0 to 139.0. Within these ranges, the effects of the present invention are more pronounced and/or their achievement is facilitated.

The PPH composition of the present invention preferably has a melt flow rate ($MFR_2$) (230°C, 2.16 kg, ISO 1133) of 1.0 to 500.0 g/10min, preferably 5.0 to 300.0 g/10min, more preferably 10.0 to 200.0 g/10min, most preferably 15.0 to 150.0 g/10min. Within these ranges, the effects of the present invention are more pronounced and/or their achievement is facilitated, and the composition can be suitably applied for injection molding.

The PPH composition of the present invention preferably has a Charpy notched impact strength ($NIS_N$) (ISO 179 1eA, 23°C) of 2.0 to 20.0 kJ/$m^2$, preferably 2.1 to 10.0 kJ/$m^2$. Within these ranges, the effects of the present invention are more pronounced and/or their achievement is facilitated, and the composition can be suitably applied in applications requiring impact strength.

The PPH composition of the present invention preferably has a relative Charpy notched impact strength improvement, i.e. $\Delta NIS = ((NIS_N - NIS_{UN})/NIS_{UN}) \times 100\%$, wherein $NIS_{UN}$ corresponds to the NIS of the SSC PPH before nucleation, of 20.0 to 70.0%, preferably 25.0 to 65.0%, more preferably 30.0 to 55.0%. In this case, the increase of the γ-crystallization induced by nucleation is more pronounced enabling to further improve the Charpy notched impact strength.

Needless to say that each of the above properties of the PPH composition (i.e. Ky, Tc, ΔTc, HM2, Tm2, $MFR_2$, $NIS_N$, and ΔNIS) as well as the properties of the SSC PPH herein may preferably be individually adjusted into a preferred or more preferred range, while it is even more preferred that two or more, most preferably all, of the above properties are adjusted into preferred and/or even more preferred ranges in combination. This principle generally applies throughout the entire application to other mentioned properties in connection with (preferred) quantifications.

The PPH composition of the present invention does not contain any component(s) which impair with attaining the essential characteristics of the PPH composition of the present invention and preferably does not include any component(s) which impair to attain its preferred characteristics.

The preparation of the PPH composition preferably comprises

(i) polymerizing propylene in the presence of a single-site polymerization catalyst into the propylene homopolymer (SSC PPH),
(ii) compounding the α-nucleating agent into the SSC PPH, wherein the SSC PPH is melted.

The polymerization of propylene according to step (i) is not especially limited as long as the essential characteristics (and preferably also the preferred characteristics) of the SSC PPH as described herein are obtained. Preferably, the polymerization of propylene is accomplished according to the procedures as described in the following chapter'Single site catalyzed polypropylene homopolymer'. The process of compounding is in the skilled knowledge and the PPH composition can for instance be obtained by mixing the SSC PPH (A) with the α-nucleating agent(s) (B) and optional component(s) (C), such as additives upon melting the SSC PPH, and/or the optional component(s) (C) may in the individual case be added already during the polymerization of the SSC PPH. For mixing, a conventional compounding or blending apparatus, such as e.g. a Banbury® mixer, a 2-roll rubber mill, Buss-co-kneader, a single screw extruder e.g. with special mixing segments or a twin screw extruder may be used. In order to facilitate the crystallization of the SSC PPH to form the γ phase, the compounding preferably involves the melting of the SSC PPH. The PPH composition recovered from compounding or blending apparatus (e.g. the extruder) can be in the form of pellets or powder.

**Nucleating agents**

The nucleating agent of the present invention will be described below. The present invention is based on the favorable interaction of an α-nucleating agent with the specific SSC PPH as defined in the present invention. Although the specific interaction achieved by this combination is not fully understood, it was found that this combination provides remarkable improvements.

The PPH composition of the present invention comprises 0.001 to 1.000 wt% based on the PPH composition of α-nucleating agent. The polypropylene composition preferably comprises 0.010 to 0.850 wt%, preferably 0.025 to 0.750 wt%, more preferably 0.050 to 0.650 wt%, most preferably 0.075 to 0.500 wt% based on the total weight of the PPH composition of α-nucleating agent. The α-nucleating agent may be used as a single α-nucleating agent or a mixture of α-nucleating agents, optionally provided in the form of a masterbatch.

The specific type of nucleating agent is not particularly limited as long as it is a α-nucleating agent that induces γ-crystallization of the SSC PPH. Such nucleating agents can also be separated into two classes with physically distinct behavior:

- Particulate nucleating agents with a conventional dispersion mechanism. Examples for this class include inorganic type nucleating agents, such as carbonates, silicates, and aluminates or alumosilicates, but also non-polymeric

organic type like organic carboxylic acid salts, e.g. sodium benzoate and salts of p(tert-butylbenzoic acid), and organophosphates, as well as polymeric nucleating agents, like poly(vinyl cyclohexane) and poly(vinyl cyclopentane);

- Soluble nucleating agents with a sequence of dissolution upon heating and recrystallization upon cooling defining the degree of dispersion. Examples include sorbitol derivatives, nonitol derivatives and benzene-trisamides.

In the context of the present invention, the term "particulate nucleating agent" means that the respective nucleating agent neither melts nor dissolves in the polypropylene homopolymer in the temperature range used for processing, like in the temperature range between the melting point and 300°C. The term "dispersion/dispersive" means that the nucleating agent is/will be present in a dispersed state in the PPH. For details, e.g. regarding the distinction between different types of nucleating agents, which are herein referred to as low molecular weight organic (type), polymeric (type) and inorganic (type) nucleating agents, reference is made to M. Gahleitner, C. Grein, S. Kheirandish & J. Wolfschwenger, "Nucleation of Polypropylene Homo- and Copolymers", Intern.Polym.Proc. 26 (2011) 2-20).

The dispersive particulate $\alpha$-nucleating agent is preferably selected from low molecular weight organic type nucleating agent(s). Low molecular weight organic type nucleating agents are also referred to as non-polymeric organic type nucleating agents. This means that the organic part (e.g. an organic anion in the case of a metal salt) does not have a polymer chain, in particular that a organic part has a molecular weight of not more than 800 g/mol, preferably not more than 600 g/mol, more preferably not more than 500 g/mol, like not more than 400 g/mol.

The dispersive particulate $\alpha$-nucleating agent is more preferably selected from salts of diesters of phosphoric acid, such as sodium 2,2'-methylenebis (4,6,-di-tert-butylphenyl) phosphate or aluminium-hydroxy-bis[2,2'-methylene-bis(4,6-di-t-butylphenyl)phosphate], and, more preferably is sodium 2,2'-methylenebis (4,6,-di-tert-butylphenyl) phosphate. In this case, the amount of the required $\alpha$-nucleating agent may be very small and the effects of the present invention are more pronounced and/or their achievement is facilitated.

The soluble particulate $\alpha$-nucleating agent is preferably selected from sorbitol compounds and nonitol compounds, such as 1,3 : 2,4 Bis(3,4-dimethylbenzylidene) sorbitol and 1,2,3-trideoxy-4,6:5,7-bis-O-((4-propylphenyl) methylene) nonitol, more preferably is 1,2,3-trideoxy-4,6:5,7-bis-O-((4-propylphenyl) methylene) nonitol. In this case, the amount of the required $\alpha$-nucleating agent is still small and the effects of the present invention are more pronounced and/or their achievement is facilitated, especially in terms of further improved transparency.

**Single site catalyzed polypropylene homopolymer**

The PPH composition of the present invention comprises 95.000 to 99.999 wt% based on the PPH composition of a single site catalyzed polypropylene homopolymer (SSC PPH) having 2,1 regio-defects ($^{13}$C-NMR spectroscopy) in an amount of 0.00 to 0.10 mol%, a pentad isotacticity <mmmm> (NMR) in the range of 70.0 to 90.0%, a weight average molecular weight $M_w$ (GPC) in the range of 10.0 to 1000.0 kg/mol, and a polydispersity MWD (GPC) in the range of 2.0 to 6.0.

The PPH composition preferably comprises, based on the total weight the PPH composition, 96.000 to 99.990 wt%, more preferably 97.000 to 99.950 wt%, even more preferably 97.500 to 99.900 wt%, yet more preferably 98.000 to 99.875, most preferably 99.000 to 99.850 of the SSC PPH. Within these ranges, the effects of the present invention are more pronounced and/or their achievement is facilitated.

The SSC PPH preferably has 2,1 regio-defects ($^{13}$C-NMR spectroscopy) in an amount of 0.00 to 0.05 mol%, and may have zero amount (0.00 mol%) of 2,1 regio-defects. Within these ranges, the effects of the present invention are more pronounced and/or their achievement is facilitated.

The SSC PPH preferably has a pentad isotacticity <mmmm> (NMR) in the range of 75.0 to 89.5%, more preferably 80.0 to 89.0%, most preferably 84.0 to 88.5%. Within these ranges, the effects of the present invention are more pronounced and/or their achievement is facilitated.

The SSC PPH preferably has a weight average molecular weight $M_w$ (GPC) in the range of 15.0 to 650.0 kg/mol, more preferably 25.0 to 450.0, most preferably 40.0 to 300.0 kg/mol. Within these ranges, the effects of the present invention are more pronounced and/or their achievement is facilitated.

The SSC PPH preferably has a polydispersity MWD (GPC) in the range of 2.2 to 5.0, more preferably 2.5 to 4.5, most preferably 2.7 to 4.0. Within these ranges, the effects of the present invention are more pronounced and/or their achievement is facilitated.

The SSC PPH is preferably defined by additional characteristics each enabling that the effects of the present invention are more pronounced and/or that their achievement is further facilitated.

That is, the SSC PPH preferably has a xylene cold solubles (XCS) content (25°C, ISO 16152) of 0.1 to 5.0 wt%, more preferably 0.5 to 3.5 wt%, most preferably 1.0 to 2.9 wt%.

The SSC PPH preferably has a melt flow rate ($MFR_2$) (230°C, 2.16 kg, ISO 1133) of 1.0 to 400.0 g/10min, more preferably 5.0 to 300.0 g/10min, more preferably 10.0 to 200.0 g/10min, most preferably 15.0 to 150.0 g/10min.

The SSC PPH preferably has a crystallization temperature (Tc) (DSC) of 90.0 to 115.0°C, more preferably 95.0 to 112.5°C, most preferably 100.0 to 110.0°C.

As stated above, each of the above properties of the SSC PPH (i.e. 2,1 regio-defects, pentad isotacticity <mmmm>, Mw, MWD, XCS, $MFR_2$, Tc etc.) as well as the above properties of the PPH may preferably be individually adjusted into a preferred or more preferred range, while it is even more preferred that two or more, most preferably all, of the above properties are adjusted into preferred and/or even more preferred ranges in combination. This principle generally applies throughout the entire application to other mentioned properties in connection with (preferred) quantifications.

The SSC PPH may be produced by any suitable method known in the art, as long as the above essential, and preferably, also the preferred characteristics thereof, are satisfied.

The polymerization of propylene by essentially using a single site polymerization catalyst may be effected in one or more, e.g. 1, 2 or 3, polymerization reactors, using conventional polymerization techniques, e.g. gas phase, solution phase, slurry or bulk polymerization. A combination of slurry (or bulk) and at least one gas phase reactor (GPR) may be used, particularly with the reactor sequence in the order of a slurry (or bulk) reactor and one or more, more preferably one, GPR, optionally with a pre-polymerization reactor prior to the slurry (or bulk) reactor. Note that the pre-polymerization is not considered to represent a (main) polymerization step of its own. That is, the PPH composition may contain just one polypropylene polymer component (i.e. prepared in a single step polymerization process) or may contain two or more (most preferably two) polypropylene homopolymer components, which are prepared in a sequence of at least two (most preferably two) polymerization reactors (so-called reactor-blending).

The SSC PPH is preferably a monomodal SSC PPH made in a one-stage polymerization process by e.g. bulk reactor, optionally applying prepolymerization prior to the main polymerization in e.g. bulk reactor. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. In case of applying a polymeric α-nucleating agent, the α-nucleation may be achieved in the prepolymerization process were the catalyst is prepolymerized with a suitable monomer, such as vinyl cyclohexane and vinyl cyclopentane, to produce nucleating polymers, which are then dispersed finely during the main polymerization of the SSC PPH. The prepolymerization step is preferably conducted in slurry and the amount of polymer produced in an optional prepolymerization step is counted to the amount (wt%) of the SSC PPH. It is understood that the amount of polymer produced in the prepolymerization may be within 1 to 5 wt% in respect to the final SSC PPH. Conditions for operating a polymerization reactor (e.g. bulk reactor) and how to adjust and fine-tune final polymer properties are known to the skilled person or can be determined by orientating experimentation.

Preferred operation conditions in a slurry or bulk reactor may be as follows:

- temperature within the range of 55 to 95°C, more preferably 60 to 90°C, most preferably 65 to 85°C, e.g. 78±5°C,
- pressure within the range of 30 to 75 barg, more preferably 40 to 70 barg, most preferably 45 to 60 parg, e.g. 53±5 barg,
- hydrogen can be added for controlling the molar mass in a manner known per se.

Preferred operation conditions in a GPR may be as follows:

- temperature within the range of 50 to 130°C, more preferably 60 to 100°C, most preferably 70 to 90°C, e.g. 80±5°C,
- pressure within the range of 5 to 45 barg, more preferably 15 to 40 barg, e.g. 25±5 barg,
- hydrogen can be added for controlling the molar mass in a manner known per se.

Preferred operation conditions for the prepolymerization may be as follows:

- prepolymerization reaction is typically conducted at a temperature of 0 to 60°C, preferably from 15 to 50°C, and more preferably from 20 to 45°C.

The SSC PPH having the above properties can suitable and preferably be produced in the presence of a single site metallocene complex of formula (I):

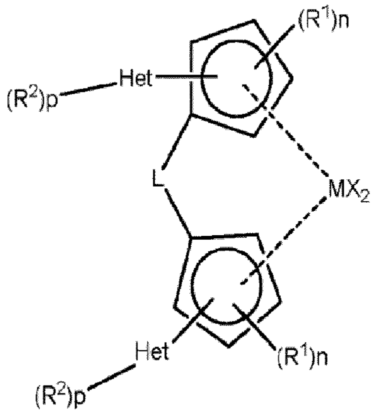

(I) ,

wherein each X is independently a halogen atom, a $C_{1-6}$-alkyl, $C_{1-6}$-alkoxy group, phenyl or benzyl group;
each Het is independently a monocyclic heteroaromatic group containing at least one heteroatom selected from O or S;
L is -$R'_2$Si-, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl or $C_{1-6}$-alkoxy group;
each n is 1 to 2;
each $R^2$ is the same or different and is a $C_{1-6}$-alkyl, $C_{1-6}$-alkoxy group or -Si(R)$_3$ group;
each R is $C_{1-10}$-alkyl or phenyl group optionally substituted by 1 to 3 $C_{1-6}$-alkyl groups; and
each p is 0 to 1.

Preferably, the single site metallocene complex of formula (I) has the structure of formula (I'):

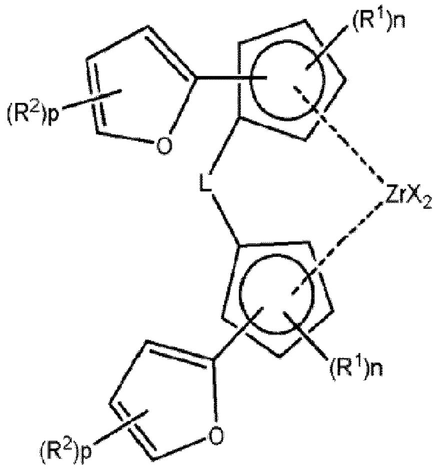

(I')

wherein each X is independently a halogen atom, a $C_{1-6}$-alkyl, $C_{1-6}$-alkoxy group, phenyl or benzyl group;
L is -$Me_2$Si-;
each $R^1$ is the same or different and is a $C_{1-6}$-alkyl, e.g. methyl or tert-butyl; each n is 1 to 2;
$R^2$ is a -Si(R)$_3$ group; each p is 1; and
each R is $C_{1-6}$-alkyl or phenyl group.

Specifically preferred single site metallocene complex of formula (I) respectively formula (I') are as follows.

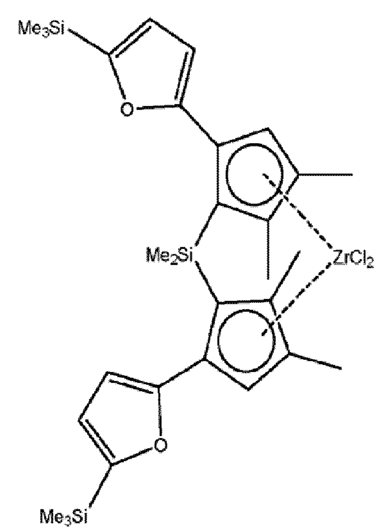

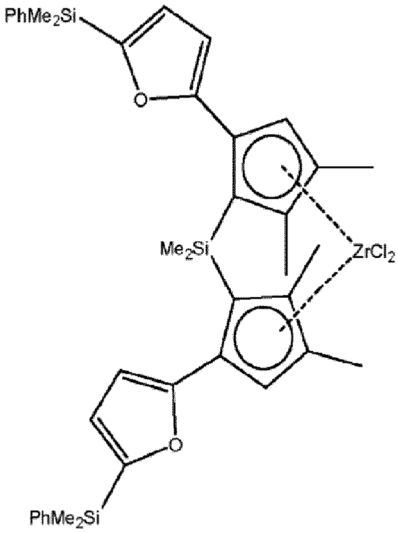

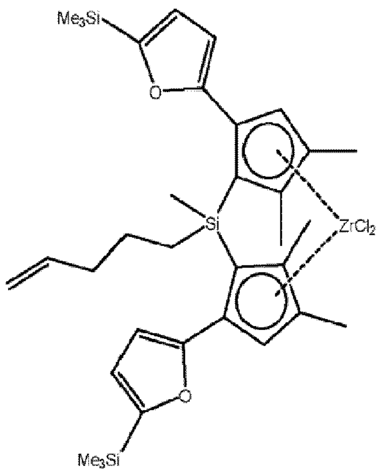

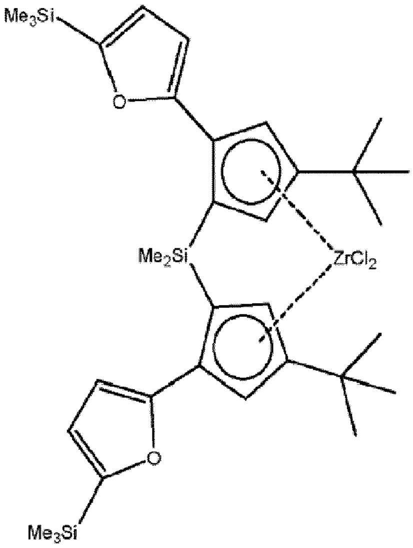

Most preferably, the single site metallocene complex is (Rac-) dimethylsilanediylbis{2-(5-(trimethylsilyl)furan-2-yl)-4,5-dimethylcyclopentadien-1-yl}zirconium dichloride.

To form an active catalytic species, a co-catalyst (also known as activator) as known in the art is employed. Accordingly, besides the metallocene complex (pro-catalyst), the metallocene catalyst (also referred to as catalyst system) comprises additionally a co-catalyst. Cocatalysts comprising Al or B are well known and can be used here. A co-catalyst system comprising a boron containing co-catalyst and an aluminoxane co-catalyst in combination can also be used.

A preferred aluminoxane co-catalyst is the following formula:

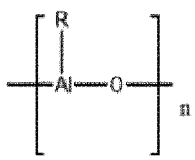

where n is from 6 to 20 and R is a monovalent group being preferably selected from the group consisting of C1-C10-alkyl, preferably C1-C5-alkyl, or C3-C10-cycloalkyl, C7-C12-arylalkyl or -alkylaryl and/or phenyl or naphthyl. Aluminoxanes are formed on partial hydrolysis of organoaluminum compounds, for example those of the formula $AlR_3$, $AlR_2Y$ and $Al_2R_3Y_3$ where R can be, for example, C1-C10-alkyl, preferably C1-C5-alkyl, or C3-C10-cycloalkyl, C7-C12-arylalkyl or -alkylaryl and/or phenyl or naphthyl, and where Y can be hydrogen, halogen, preferably chlorine or bromine, or C1-C10-alkoxy, preferably methoxy or ethoxy. The resulting oxygen-containing aluminoxanes are not in general pure compounds but

mixtures of oligomers of the above formula. A preferred aluminoxane is methylaluminoxane (MAO). Since the aluminoxanes usable as cocatalysts are not, owing to their mode of preparation, pure compounds, the molarity of aluminoxane solutions is usually based on their aluminium content.

The use of aluminoxanes (e.g. MAO) or boron based cocatalysts (such as borates, preferably trityl tetrakis(pentafluorophenyl)borate) is preferred.

The catalyst system of the invention is preferably used in supported form, i.e. the metallocene catalyst is a supported catalyst. The (particulate) support material used is preferably silica or a mixed oxide such as silica-alumina, in particular silica. The use of a silica support is preferred. The skilled man is aware of the procedures required to support a metallocene catalyst. In a preferred embodiment, the catalyst system corresponds to CAT1 of WO 2023/012257 A1.

### Other Components

The polypropylene composition preferably comprises up to 4.999 wt%, preferably 0.010 to 3.500 wt%, more preferably 0.025 to 2.500 wt%, more preferably 0.050 to 1.500 wt%, most preferably 0.075 to 0.750 wt%, other component(s) such as additives (component (C)) based on the polypropylene composition. The additives are preferably selected from the group consisting of antioxidants, acid scavenges, UV-stabilizers, antistatic agents, and slip agents and mixtures thereof. Notably, it is possible that two or more functions can be combined in the same molecule and such a constitution may be preferred to reduce the overall amount of additives. Preferably, at least antioxidant(s), preferably at least antioxidant(s) and acid scavenger(s), are present as additive(s).

In the context of the present invention, a polymer component of a masterbatch used for adding an additive and/or nucleating agent(s) is considered an "additive", even though the polymer component of a masterbatch (also referred to as matrix) is preferably a polypropylene homopolymer as well.

### Use of the polypropylene homopolymer (PPH) composition and Article

The present invention relates to the use of the above PPH composition for producing an article by molding, i.e. a molded article (preferably injection-molded article).

The present invention further relates to an article comprising the above PPH composition. Preferably, at least 80 wt%, more preferably at least 90 wt%, more preferably at least 95 wt% of the article is made of the PPH composition described above and it also possible and preferred that the article is made of, i.e. consists of the PPH composition.

Preferably, the article is a molded article. Appropriate molding processes for preparing the molded article of the present invention are commonly known to the skilled person. Preferably, the molded article is prepared by injection molding, injection blow molding, injection stretch blow molding, thin wall injection molding, high speed injection molding, or any combination thereof. More preferably, it is an injection molded article, an injection blow molded article, or an injection stretch blow molded article, and most preferably, the molded article is an injection molded article.

The molded article can comprises one or more three-dimensionally curved areas (i.e. is not entirely flat) and may be rigid.

Further, the molded article of the present invention is useful e.g. for automotive applications (e.g. an automotive exterior or interior part), packaging applications (e.g. rigid packaging, transport packaging, bottles etc.), major and small appliances, and consumer electronics (e.g. housings thereof) etc.

The injection molded article is preferably a thin-wall packaging article, like a cup, a tray, a pail or a lid. The injection molded article preferably has a wall thickness in the range of from 0.1 to 2.0 mm, like in the range of from 0.2 to 2.0 mm.

## Examples

The following examples are included to demonstrate certain aspects and embodiments of the invention as described in the claims. It should be appreciated by those of skill in the art, however, that the following description is illustrative only and should not be taken in any way as a restriction of the invention. Nevertheless, values, such as properties and conditions, disclosed in the Examples may be combined with ranges disclosed in a more general context (e.g. claims or general description) to give new (more limited or different) ranges without any limitation.

### 1. Measuring methods

The following definitions of terms and determination methods apply for the above general description of the invention as well as to the below examples unless otherwise defined. Unless specifically stated to the contrary, if a determination method (measurement method) is described in the context of (only) one product or material or without reference to a specific product/material, it is to be understood that the same method can be used for measurement the same property of another product/material. This similarly applies to all measurement methods disclosed herein.

**Melt flow rate (MFR)**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR was determined at 230°C and a loading of 2.16 kg ($MFR_2$).

**Xylene cold soluble content (XCS, wt%)**

The amount of the polymer soluble in xylene was determined at 25°C according to ISO 16152; 5th edition; 2005-07-01.

**DSC analysis, melting temperature (Tm), melting enthalpy (Hm), crystallization temperature (Tc) and crystallization enthalpy (Hc)**

DSC analysis was performed with a TA Instrument Q200 differential scanning calorimetry (DSC) on 5 to 7 mg samples. DSC is run according to ISO 30 11357 / part 3 /method C2 in a heat / cool / heat cycle with a scan rate of 10 °C/min in the temperature range of -30 to +225°C. Crystallization temperature (Tc) and crystallization enthalpy (Hc) were determined from the cooling step, while melting temperature(s) (Tm) and melting enthalpy(ies) (Hm) were determined from the second heating step.

**Flexural Modulus (FM)**

The flexural modulus was determined in 3-point-bending at 23°C according to ISO 178 on 80x10x4 $mm^3$ test bars injection molded in line with EN ISO 19069-2.

**GPC (Mw, Mn, MWD)**

Number average molecular weight (Mn), weight average molecular weight (Mw) and polydispersity (Mw/Mn, MWD) were determined by Gel Permeation Chromatography (GPC) according to the following method:

The weight average molecular weight Mw and the polydispersity (Mw/Mn, wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscometer was used with 3×TSK-gel columns (GMHXL-HT) from TosoHaas and 1,2,4-trichlorobenzene (TCB, stabilized with 200 mg/L 2,6-di tert butyl-4-methyl-phenol) as solvent at 145°C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well-characterized broad polypropylene standards. All samples were prepared by dissolving 5-10 mg of polymer in 10 mL (at 160°C) of stabilized TCB (same as mobile phase) and keeping for 3 hours with continuous shaking prior sampling in into the GPC instrument.

**Quantitative nuclear-magnetic resonance (NMR) spectroscopy used to quantify the isotacticity and regio-regularity of polypropylene homopolymer**

Quantitative nuclear-magnetic resonance (NMR) spectroscopy was used to quantify the isotacticity and regio-regularity of the polypropylene homopolymer.

Quantitative $^{13}C\{^1H\}$ NMR spectra were recorded in solution-state using a Bruker Advance III 400 NMR spectrometer operating at 400.15 MHz and 100.62 MHz for $^1H$ and $^{13}C$ respectively. All spectra were recorded using a $^{13}C$ optimized 10 mm extended temperature probehead at 125°C using nitrogen gas for all pneumatics.

Approximately 200 mg of material was dissolved in *1,2*-tetrachloroethane-$d_2$ (TCE-$d_2$). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilizing the NOE and bilevel WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

For polypropylene homopolymers all chemical shifts are internally referenced to the methyl isotactic pentad (mmmm) at 21.85 ppm.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects on the quantification of the tacticity distribution was corrected for by subtraction of representative regio-defect integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (mmmm\ /\ \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8})/2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The molar percent of 2,1 erythro regio-defects was quantified with respect to all propene:

$$[21e]\ mol\% = 100 * (P_{21e}\ /\ P_{total})$$

**Charpy notched impact strength (NIS) and ΔNIS**

Charpy impact strength was determined according to ISO 179-1eA:2000 on V-notched samples of 80x10x4 mm$^3$ at +23°C. The test specimens were prepared by injection molding according to EN ISO 19069-2.

The relative effect of α-nucleation on impact strength (ΔNIS) was calculated on the basis of the following formula:

$$\Delta NIS = ((NIS_N - NIS_{UN})/NIS_{UN}) \times 100\%$$

where $NIS_N$ stands for the value of the nucleated polymer while $NIS_{UN}$ stands for the value of the non-nucleated polymer.

**Wide angle X-ray scattering measurement (WAXS)**

Samples for WAXS measurement have been prepared according to ISO 173-2, on a frame mold. The conditions for compression molding of test specimens were:

| | | |
|---|---|---|
| Moulding temperature | [°C] | 210 |
| Average cooling rate | [°C/min] | 15 |
| Demoulding temperature | [°C] | ≤ 40 |
| Full Pressure | [MPa] | 5 |
| Full-pressure time | [min] | 5 |

(continued)

| | | |
|---|---|---|
| Preheating pressure | [MPa] | none |
| Preheating time | [min] | 10 |

The measurement of wide-angle X-ray scattering (WAXS) of the test specimens was conducted by a Bruker D8 Discover apparatus. The diffractometer was equipped with an X-ray tube with a copper target operating at 30 kV and 20mA and a GADDS 2-D detector. A point collimation (0.5 mm) was used to direct the beam onto the surface. The measurement was done in reflection geometry, and 28 angle in the range from 10° to 32.5° were measured. Data were collected for 300 s. Intensity vs. 2-theta curve was acquired with the same measurement parameters on an amorphous polypropylene sample, which was prepared by solvent extraction. An amorphous halo was obtained by smoothing the curve. The amorphous halo has been subtracted from the measured intensity vs. 2-theta curve to result in the crystalline curve.

The crystallinity index Xc can be defined with the area under the crystalline curve and the original spectrum using Challa, Hermans and Weidinger method [Challa G, Hermans PH, Weidinger A, Makromol. Chem. 56, 169 (1962)] as:

$$X_c = \frac{\text{area under crystalline curve}}{\text{area under original spectrum}} \times 100$$

The amount of γ-form of SSC PPH within the crystalline phase Kγ was calculated using the method developed by Pae [Pae KD, J. Polym. Sci., Part A, 6, 657 (1968)] as:

$$K_\gamma = \frac{I^\gamma(117)}{I^\alpha(130) + I^\gamma(117)}$$

where, $I^\alpha(130)$ is the intensity of α(130) peak and $I^\gamma(117)$ is the intensity of y(117) peak obtained after subtracting a base line joining the base of these peaks.

## Experimental part

### Preparation of PP1 (IE1, IE2 and CE1)

The polymerization was done in a stirred autoclave with a volume of 21.2 $dm^3$. The evacuated autoclave was filled with 5400 g propylene. 0.25 - 0.50 mmol triethylaluminium (0.6 mol/l solution in heptane) were added using a stream of 250 g propylene. The solution was stirred at 25°C for at least 20 min. Then, 6.7 mmol of hydrogen were fed using a flow controller. 1050 - 1150 mg of catalyst were weighed into a steel vial inside a glove box and suspended in 3 ml n-heptane. The vial was attached to the polymerization autoclave and the catalyst was flushed into the reactor with additional 350 g propylene. The catalyst used in the preparation is described in WO2023/012257 A1, Examples, CAT1. For prepolymerization, the reactor was stirred for 10 min at 25°C. Then the reactor temperature was raised to the bulk temperature of 80°C. When the temperature exceeded 78°C, additional 15.6 mmol of hydrogen were added with a flow meter and the timing for the bulk polymerization was started. After 240 min polymerization time, the reactor was flashed to ambient pressure, purged two times with nitrogen and evacuated in order to remove residual hydrocarbons. The final polymer is a SSC PPH that has Mw 151 kg/mol, MWD 2.9, mmmm% 86.4 mol%, 2,1 error 0 mol%, and XCS 1.4 wt%.

### Preparation of PP2 (CE2 and CE3)

The polymerization was done in a Borstar pilot plant, with a set-up of prepolymerizer - loop. The catalyst used is Avant ZN180M (commercially available from LyondellBasell). The polymerization condition is optimized to reach the target polymer. The typical condition are: TEAL 170 g/t C3, Donor C 15 g/t C3, H2 3200ppm, loop temperature 70°C, pressure 35bar. The final polymer is a Ziegler-Natta polymerized polymer that has Mw 142 kg/mol, MWD 7.1, mmmm% 94.5 mol%, 2,1 error 0 mol%, and XCS 3.0 wt%.

### Preparation of polymer composition

The above mentioned PP powders were mixed with additive (recipe see Table 1), and then compounded in a TSE 16 twin screw extruder, with a melt temperature 210°C, and production rate of 2 kg/h. The properties measured are shown

in Table 1.

Table 1 Recipe and properties of IEs and CEs.

| | | CE1 | IE1 | IE2 | CE2 | CE3 |
|---|---|---|---|---|---|---|
| PP1 | wt% | 99,8 | 99,7 | 99,4 | | |
| PP2 | wt% | | | | 99,8 | 99,4 |
| AO | wt% | 0,15 | 0,15 | 0,15 | 0,15 | 0,15 |
| AS | wt% | 0,05 | 0,05 | 0,05 | 0,05 | 0,05 |
| NU1 | wt% | 0 | 0,1 | 0 | 0 | 0 |
| NU2 | wt% | 0 | 0 | 0,4 | 0 | 0,4 |
| MFR | g/10min | 50 | 50 | 50 | 76 | 76 |
| Tc | °C | 104 | 115 | 118 | 111 | 118 |
| Tm1 | °C | 140 | 143 | 144 | 161 | 165 |
| Tm2 | °C | | 134 | 134 | | |
| Hm1 | J/g | 87 | 26 | 20 | 115 | 118 |
| Hm2 | J/g | | 60 | 71 | | |
| FM | MPa | 1278 | 1481 | 1520 | 1578 | 2107 |
| $NIS_N$ | kJ/m2 | 1,8 | 2,4 | 2,4 | 1,8 | 1,3 |
| $K\gamma$ | | 0.27 | 0.70 | 0.75 | 0 | 0.13 |
| $\Delta$Tc | °C | 0 | 11 | 14 | 0 | 7 |
| $\Delta$NIS | % | 0 | 33,3 | 33,3 | 0 | -27,8 |
| AO (antioxidant) is Irganox B 215 produced by BASF<br>AS (acid scavenger) is CEASIT AV FI produced by Bärlocher<br>NU1 is sodium 2,2'-methylene bis-(4,6-di-tert. butylphenyl) phosphate, CAS No. 85209-91-2, commercially available from Adeka under trade name Adeka STAB NA11<br>NU2 is 1,2,3-trideoxy-4,6:5,7-bis-O-((4-propylphenyl) methylene) nonitol, CAS No. 882073-43-0, commercially available from Milliken under trade name of Millad NX8000J | | | | | | |

$$\Delta Tc = Tc \text{ nucleated sample} - Tc \text{ unnucleated sample}$$

$$\Delta NIS = ((NIS_N - NIS_{UN})/NIS_{UN}) \times 100\%$$

As can be seen, the present invention is able to significantly improve nucleation performance to attain high $\gamma$ phase content to have higher $\Delta$Tc, and increased flexural modulus (improved stiffness) and improved impact strength (NIS), i.e. large ANIS, of the IEs, as compared to the CE1, by using a specific SSC PPH in combination with suitable $\alpha$-nucleating agent in low amounts. In opposite, for the Ziegler Natta-polymerized polymer, which does not fulfill the inventive features, the NIS is even reduced by nucleation, i.e. $\Delta$NIS is negative.

## Claims

**1.** A polypropylene homopolymer (PPH) composition, which comprises

(A) 95.000 to 99.999 wt% based on the PPH composition of a single site catalyzed polypropylene homopolymer (SSC PPH), wherein the SSC PPH has

- 2,1 regio-defects ($^{13}$C-NMR spectroscopy) in an amount of 0.00 to 0.10 mol%,
- a pentad isotacticity <mmmm> (NMR) in the range of 70.0 to 90.0%,

- a weight average molecular weight $M_w$ (GPC) in the range of 10.0 to 1000.0 kg/mol, and
- a polydispersity MWD (GPC) in the range of 2.0 to 6.0,

(B) 0.001 to 1.000 wt% based on the PPH composition of α-nucleating agent, wherein the PPH composition has

- a γ-phase content Kγ (WAXS) of more than 0.30 and less than 0.99.

**2.** The polypropylene homopolymer (PPH) composition according to claim 1, wherein the PPH composition comprises 96.000 to 99.990 wt%, preferably 97.000 to 99.950 wt%, more preferably 97.500 to 99.900 wt%, even more preferably 98.000 to 99.875, most preferably 99.000 to 99.850 based on the total weight the PPH composition of SSC PPH (A), and/or comprises 0.010 to 0.850 wt%, preferably 0.025 to 0.750 wt%, more preferably 0.050 to 0.650 wt%, most preferably 0.075 to 0.500 wt% based on the total weight of the PPH composition of α-nucleating agent (B).

**3.** The polypropylene homopolymer (PPH) composition according to claim 1 or 2, wherein the PPH composition has

- a γ-phase content Kγ (WAXS) of 0.55 to 0.95, preferably 0.60 to 0.90, most preferably 0.65 to 0.85, and/or
- a crystallization temperature (Tc) (DSC) of 108.0 to 128.0°C, preferably 112.0 to 125.0°C, more preferably 112.5 to 122.5°C, and/or a relative Tc increase (ΔTc= (Tc-$Tc_{UN}$, wherein $Tc_{UN}$ corresponds to the Tc of the SSC PPH before nucleation) of 8.0 to 25.0°C, preferably 9.0 to 20.0°C, and/or
- a main melt enthalpy (Hm2) (DSC) of 45.0 to 85.0 J/g, preferably 48.0 to 80.0 J/g, more preferably 50.0 to 78.0 J/g, and/or
- a main melting temperature (Tm2) (DSC) of 125.0 to 148.0°C, preferably 128.0 to 145.0, more preferably 129.0 to 139.0, and/or
- a melt flow rate ($MFR_2$) (230°C, 2.16 kg, ISO 1133) of 1.0 to 500.0 g/10min, preferably 5.0 to 300.0 g/10min, more preferably 10.0 to 200.0 g/10min, most preferably 15.0 to 150.0 g/10min, and/or
- a Charpy notched impact strength ($NIS_N$) (ISO 179 1eA, 23°C) of 2.0 to 20.0 kJ/m$^2$, preferably 2.1 to 10.0 kJ/m$^2$ and/or a relative Charpy notched impact strength improvement (ΔNIS= (($NIS_N$-$NIS_{UN}$)/$NIS_{UN}$) × 100%, wherein $NIS_{UN}$ corresponds to the NIS of the SSC PPH before nucleation) of 20.0 to 70.0%, preferably 25.0 to 65.0%, more preferably 30.0 to 55.0%.

**4.** The polypropylene homopolymer (PPH) composition according to any one of claims 1 to 3, wherein the SSC PPH has

- 2,1 regio-defects ($^{13}$C-NMR spectroscopy) in an amount of 0.00 to 0.05 mol%, and/or
- a pentad isotacticity <mmmm> (NMR) in the range of 75.0 to 89.5%, preferably 80.0 to 89.0%, more preferably 84.0 to 88.5%, and/or
- a weight average molecular weight $M_w$ (GPC) in the range of 15.0 to 650.0 kg/mol, preferably 25.0 to 450.0, more preferably 40.0 to 300.0 kg/mol, and/or
- a polydispersity MWD (GPC) in the range of 2.2 to 5.0, preferably 2.5 to 4.5, more preferably 2.7 to 4.0.

**5.** The polypropylene homopolymer (PPH) composition according to any one of claims 1 to 4, wherein the SSC PPH has

- a xylene cold solubles (XCS) content (25°C, ISO 16152) of 0.1 to 5.0 wt%, preferably 0.5 to 3.5 wt%, more preferably 1.0 to 2.9 wt%, and/or
- a melt flow rate ($MFR_2$) (230°C, 2.16 kg, ISO 1133) of 1.0 to 400.0 g/10min, preferably 5.0 to 300.0 g/10min, more preferably 10.0 to 200.0 g/10min, most preferably 15.0 to 150.0 g/10min, and/or
- a crystallization temperature (Tc) (DSC) of 90.0 to 115.0°C, preferably 95.0 to 112.5°C, more preferably 100.0 to 110.0°C.

**6.** The polypropylene homopolymer (PPH) composition according to any one of claims 1 to 5, wherein the α-nucleating agent is (i) a particulate nucleating agent selected from the group consisting of (1) non-polymeric organic type nucleating agents, including organic carboxylic acid salts, organophosphoric acid salts or combinations thereof, and (2) inorganic type nucleating agents, such as carbonates, silicates, and aluminates or alumosilicates, or combinations thereof, and (3) polymeric nucleating agents, including poly(vinyl cyclohexane) and poly(vinyl cyclopentane), or (ii) a soluble nucleating agent, including sorbitol compounds, nonitol compounds, and trisamide compounds, or combinations thereof.

**7.** The polypropylene homopolymer (PPH) composition according to any one of claims 1 to 6, wherein the α-nucleating agent is selected from the group consisting of

(i) salts of diesters of phosphoric acid, such as sodium 2,2'-methylenebis (4,6,-di-tert-butylphenyl) phosphate or aluminium-hydroxy-bis[2,2'-methylene-bis(4,6-di-t-butylphenyl)phosphate], and
(ii) sorbitol compounds and nonitol compounds, such as 1,3 : 2,4 Bis(3,4-dimethylbenzylidene) sorbitol and 1,2,3-trideoxy-4,6:5,7-bis-O-((4-propylphenyl) methylene) nonitol,

and wherein the α-nucleating agent preferably includes, more preferably is, sodium 2,2'-methylenebis (4,6,-di-tert-butylphenyl) phosphate and/or 1,2,3-trideoxy-4,6:5,7-bis-O-((4-propylphenyl) methylene) nonitol.

**8.** The polypropylene homopolymer (PPH) composition according to any one of claims 1 to 7, further comprising up to 4.999 wt%, preferably 0.010 to 3.500 wt%, more preferably 0.025 to 2.500 wt%, more preferably 0.050 to 1.500 wt%, most preferably 0.075 to 0.750 wt%, additive(s) based on the PPH composition, said additive(s) being preferably selected from the group consisting of antioxidants, acid scavenges, UV-stabilizers, antistatic agents, and slip agents and mixtures thereof.

**9.** The polypropylene composition according to any one of claims 1 to 8, wherein the SSC PPH is a monomodal SSC PPH made in a one-stage polymerization process.

**10.** The polypropylene homopolymer (PPH) composition according to any one of claims 1 to 9, wherein the SSC PPH is produced in the presence of a single site metallocene complex of formula (I):

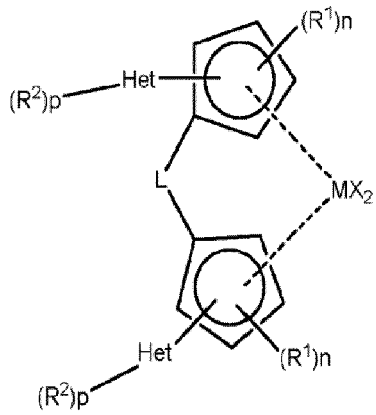

(I)

,

wherein each X is independently a halogen atom, a $C_{1-6}$-alkyl, $C_{1-6}$-alkoxy group, phenyl or benzyl group;
each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl or $C_{1-6}$-alkoxy group;
each n is 1 to 2;
each $R^2$ is the same or different and is a $C_{1-6}$-alkyl, $C_{1-6}$-alkoxy group or $-Si(R)_3$ group;
each R is $C_{1-10}$-alkyl or phenyl group optionally substituted by 1 to 3 $C_{1-6}$-alkyl groups; and
each p is 0 to 1.

**11.** The polypropylene homopolymer (PPH) composition according to claim 10, wherein the single site metallocene complex is Rac-dimethylsilanediylbis{2-(5-(trimethylsilyl)furan-2-yl)-4,5-dimethylcyclopentadien-1-yl}zirconium dichloride.

**12.** Method for producing the polypropylene homopolymer (PPH) composition according to any one of claims 1 to 11, comprising

(i) polymerizing propylene in the presence of a single-site polymerization catalyst into the propylene homopolymer (SSC PPH),
(ii) compounding the α-nucleating agent into the SSC PPH, wherein the SSC PPH is melted.

**13.** Use of the polypropylene homopolymer (PPH) composition according to any one of claims 1 to 11 for producing an article by molding, preferably by injection molding.

**14.** Article, comprising the polypropylene homopolymer (PPH) composition according to any one of claims 1 to 11.

**15.** Article according to claim 14, wherein the article is a molded article, preferably an injection molded article, and wherein the article is preferably selected from a packaging article, an automotive exterior part, an automotive interior part, and a housing for appliance or electronics and/or wherein it is preferably an injection molded article having an wall thickness of 2 mm or less, more preferably a thin-wall packaging article, including a cup, a tray, a pail or a lid.

Europäisches Patentamt
European Patent Office
Office européen des brevets

# EUROPEAN SEARCH REPORT

Application Number
EP 24 15 7081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 415 791 A1 (BOREALIS AG [AT]) 8 February 2012 (2012-02-08) * page 19, tables 0-2, example I1 * * claim 1 * | 1-15 | INV. C08F110/06 C08K5/00 ADD. C08F4/659 C08K5/06 C08K5/523 |
| A | ROSA DE C ET AL: "STRUCTURE-PROPERTY CORRELATIONS IN POLYPROPYLENE FROM METALLOCENE CATALYSTS: STEREODEFECTIVE, REGIOREGULAR ISOTACTIC POLYPROPYLENE", JOURNAL OF THE AMERICAN CHEMICAL SOCIETY, AMERICAN CHEMICAL SOCIETY, vol. 126, no. 51, 29 December 2004 (2004-12-29), pages 17040-17049, XP001206801, ISSN: 0002-7863, DOI: 10.1021/JA045684F * page 17041, table 1, example iPP11 * * page 17041, right column, last paragraph * * page 17042, left column, second paragraph * * page 17043, table 2, example iPP11 * * page 17045, figure 5, iPP11 * | 1-15 | |
| | | | TECHNICAL FIELDS SEARCHED (IPC) |
| A | WO 2011/120945 A1 (BOREALIS AG [AT]; OBADAL MARTIN [AT] ET AL.) 6 October 2011 (2011-10-06) * page 10, tables 1, RA130E * * page 11, table 2, example 1 * * claim 1 * | 1-15 | C08F C08K |
| A | WO 2024/013128 A1 (BOREALIS AG [AT]) 18 January 2024 (2024-01-18) * page 34, table 2, CE1 * | 1-15 | |

The present search report has been drawn up for all claims

| Place of search | Date of completion of the search | Examiner |
|---|---|---|
| Munich | 1 July 2024 | Luka, Martin |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 15 7081

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2024

| Patent document cited in search report | Publication date | Patent family member(s) | Publication date |
|---|---|---|---|
| EP 2415791 A1 | 08-02-2012 | BR 112013002730 A2 | 31-05-2016 |
| | | CN 103052661 A | 17-04-2013 |
| | | EA 201300203 A1 | 30-08-2013 |
| | | EP 2415791 A1 | 08-02-2012 |
| | | ES 2398714 T3 | 21-03-2013 |
| | | JP 5586784 B2 | 10-09-2014 |
| | | JP 2013538258 A | 10-10-2013 |
| | | KR 20130059406 A | 05-06-2013 |
| | | MX 348133 B | 29-05-2017 |
| | | US 2013303684 A1 | 14-11-2013 |
| | | WO 2012016964 A1 | 09-02-2012 |
| WO 2011120945 A1 | 06-10-2011 | CN 102821928 A | 12-12-2012 |
| | | EP 2371517 A1 | 05-10-2011 |
| | | WO 2011120945 A1 | 06-10-2011 |
| WO 2024013128 A1 | 18-01-2024 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2526146 B1
- WO 2020160892 A1
- WO 2023012257 A1


### Non-patent literature cited in the description


- **KRACHE et al.** *Macromolecules*, 2007, vol. 40, 6871-6878
- **M. GAHLEITNER** ; **C. GREIN** ; **S. KHEIRANDISH** ; **J. WOLFSCHWENGER**. Nucleation of Polypropylene Homo- and Copolymers. *Intern.Polym.Proc.*, 2011, vol. 26, 2-20
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromolecules*, 1997, vol. 30, 6251
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 11289
- **RESCONI, L.** ; **CAVALLO, L.** ; **FAIT, A.** ; **PIEMONTESI, F.** *Chem. Rev.*, 2000, vol. 100, 1253
- **CHALLA G** ; **HERMANS PH** ; **WEIDINGER A**. *Makromol. Chem.*, 1962, vol. 56, 169
- **PAE KD**. *J. Polym. Sci., Part A*, 1968, vol. 6, 657
- *CHEMICAL ABSTRACTS*, 85209-91-2
- *CHEMICAL ABSTRACTS*, 882073-43-0